(19) Europäisches Patentamt
European Patent Office
Office européen des brevets

(11) EP 0 996 666 B1

(12) **FASCICULE DE BREVET EUROPEEN**

(45) Date de publication et mention de la délivrance du brevet:
**29.10.2003 Bulletin 2003/44**

(21) Numéro de dépôt: **98940143.5**

(22) Date de dépôt: **06.07.1998**

(51) Int Cl.[7]: **C08K 5/13**, C08K 5/372, C08K 5/3475, C08K 5/3435, C08L 21/00

(86) Numéro de dépôt international:
**PCT/EP98/04150**

(87) Numéro de publication internationale:
**WO 99/002590 (21.01.1999 Gazette 1999/03)**

(54) **COMPOSITION DE CAOUTCHOUC DE PNEUMATIQUE COULEUR**

KAUTSCHUKMISCHUNG FÜR GEFÄRBTEN REIFEN

COLOUR RUBBER COMPOSITION FOR TYRE

(84) Etats contractants désignés:
**DE ES FR GB IT NL**

(30) Priorité: **07.07.1997 FR 9708760**

(43) Date de publication de la demande:
**03.05.2000 Bulletin 2000/18**

(73) Titulaire: **Compagnie Générale des Etablissements MICHELIN-MICHELIN & CIE
63040 Clermont-Ferrand Cedex 09 (FR)**

(72) Inventeur: **VASSEUR, Didier
F-63100 Clermont-Ferrand (FR)**

(74) Mandataire: **Ribière, Joel
Michelin & Cie
Service SGD/LG/PI-LAD
63040 Clermont-Ferrand Cedex 09 (FR)**

(56) Documents cités:
**US-A- 3 400 099**

- **CHEMICAL ABSTRACTS, vol. 72, no. 24, 15 juin 1970 Columbus, Ohio, US; abstract no. 122634, N.P.ZICHENKO ET AL.: "Research on anitoxidants which do not cause coloration as stabilising agents for light-weight white sidewall tires" XP002056760 & PROIZVOD. SHIN, REZINOTEKH. ASBSTOTEKH. IZDELII, no. 10, 1968, pages 4-6,**
- **D.R.SMITH: "RUBBER WORLD MAGAZINE'S BLUE BOOK" 1993 , LIPPINCOTT & PETO , AKRON, US XP002056759 * page 155, "Tinuvin P" et "Tinuvin 770" ***

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 996 666 B1

Printed by Jouve, 75001 PARIS (FR)

## Description

La présente invention se rapporte aux compositions de caoutchouc de pneumatiques, ainsi qu'aux agents antidégradants destinés à protéger ces compositions contre le vieillissement atmosphérique photo-oxydant dû à l'action combinée de l'oxygène et de la lumière.

Elle se rapporte plus particulièrement à la protection anti-photo-oxydante des compositions de caoutchouc diénique blanches, claires ou colorées, dépourvues de noir de carbone et renforcées d'au moins une charge blanche ou colorée, en particulier de silice, de telles compositions étant vulcanisables au soufre et entrant dans la constitution des pneumatiques de couleur.

Comme on le sait, les vulcanisats de caoutchoucs diéniques essentiellement insaturés, naturels comme synthétiques, en raison de la présence de doubles liaisons sur leurs chaînes moléculaires, sont susceptibles de se détériorer plus ou moins rapidement après une exposition prolongée à l'atmosphère, s'ils ne sont pas protégés, en raison de mécanismes connus d'oxydation. Ces mécanismes complexes ont été décrits par exemple dans les documents suivants: réf. [1]: "*Antidegradants for tire applications"* in *"Tire compounding*", Education Symposium No 37 (ACS), Cleveland, Communication I, Octobre 1995 ; réf. [2]: "*Non-blooming high performance antidegradants*", Kautschuk Gummi Kunststoffe, 47. Jahrgang, No 4, 1994, 248-255 ; réf. [3]: "*Antioxidants*" in Encycl. Polym. Sci. and Eng., 2nd Edition, Vol. 2, 73-91. Ils entraînent, suite à des ruptures de ces doubles liaisons et à l'oxydation des ponts de soufre, une rigidification et une fragilisation des vulcanisats, dégradation qui est en outre accélérée sous l'action conjuguée de la chaleur par "thermo-oxydation", ou encore de celle de la lumière par "photo-oxydation" (voir par ex. réf. [4]: "*Photooxydation and stabilization of polymers*", Trends in Polym. Sci., Vol. 4, No 3, 1996, 92-98 ; réf. [5]: "*Degradation mechanisms of rubbers*", Int. Polym. Science and Technol., Vol 22, No 12, 1995, 47-57).

Ces phénomènes d'oxydation ont pu être peu à peu inhibés grâce à la mise au point et commercialisation de divers agents antioxydants dont les plus efficaces sont de manière connue des dérivés de la quinoléine ("TMQ"), ou des dérivés de la p-phénylènediamine ("PPD" ou "PPDA") encore plus actifs que les premiers tels que par exemple la N-1,3-diméthylbutyl-N'-phényl-p-phénylènediarnine (6-PPD). Ces antidégradants type TMQ et PPD, parfois même associés, sont aujourd'hui très répandus et utilisés de manière quasi-systématique (voir par ex. réf [1] à [3] supra) dans les compositions de caoutchouc de pneumatique conventionnelles, chargées au moins en partie de noir de carbone leur donnant leur couleur noire caractéristique.

Depuis que les économies de carburant et la nécessité de protéger l'environnement sont devenues une priorité, et en particulier depuis la publication de la demande de brevet européen EP-A-0 501 227, l'intérêt pour les compositions renforcées à la silice a été largement relancé. Cette demande décrit une composition de caoutchouc vulcanisable au soufre renforcée préférentiellement majoritairement d'une silice précipitée particulière qui permet de fabriquer un pneumatique ayant une résistance au roulement nettement améliorée, sans affecter les autres propriétés en particulier celles d'adhérence, d'endurance et de résistance à l'usure.

La demande de brevet européen EP-A-0 810 258, publiée récemment, divulgue quant à elle une nouvelle composition de caoutchouc diénique renforcée d'une autre charge blanche particulière, en l'occurrence une alumine ($Al_2O_3$) spécifique à dispersibilité élevée, qui permet elle aussi l'obtention de pneumatiques ou de bandes de roulement ayant un tel excellent compromis de propriétés contradictoires.

On peut ainsi désormais envisager la commercialisation de pneumatiques de couleur, qui pour des raisons esthétiques, notamment dans le domaine des véhicules tourisme, correspondent à une réelle attente des utilisateurs, tout en pouvant offrir à ces derniers une économie substantielle de carburant.

Il se trouve que les agents antioxydants décrits précédemment, mis au point et optimisés après de nombreuses années de recherche sur des compositions de caoutchouc conventionnelles de couleur noire, ne conviennent pas pour la protection de compositions de caoutchouc de pneumatique chargées exclusivement de charges blanches, en particulier de silice ou d'alumine. En effet, la plupart d'entre eux, et en particulier les dérivés TMQ ou PPD précédemment cités ne sont pas stables à la lumière ; sous l'effet du rayonnement U.V., ils présentent une altération de couleur et tachent les compositions de caoutchouc, ce qui ne permet pas d'envisager leur utilisation dans des compositions blanches, claires ou colorées. D'autre part, l'absence de noir de carbone, qui jouait jusqu'ici un rôle d'absorbeur U.V. très efficace dans les compositions conventionnelles, a pour conséquence d'aggraver tous les processus de dégradation décrits précédemment, notamment ceux de photo-oxydation.

Il était donc nécessaire, pour pouvoir développer des pneumatiques de couleur, de mettre au point de nouveaux systèmes de protection contre le vieillissement photo-oxydant, présentant des compromis de propriétés nouveaux, déplacés par rapport à ceux utilisés pour les pneumatiques de couleur noire, notamment particulièrement efficaces vis-à-vis des U.V., tout en étant stables à la lumière et non-tachants vis-à-vis des compositions à protéger.

La Demanderesse a trouvé lors de ses recherches un système de protection anti-photo-oxydant qui répond aux exigences ci-dessus, ce système étant compatible d'une part avec une vulcanisation au soufre et d'autre part avec les conditions d'utilisation sévères des pneumatiques (température, fatigue due aux contraintes dynamiques).

En conséquence, un premier objet de l'invention consiste en une composition de caoutchouc de pneumatique,

blanche, claire ou colorée, dépourvue de noir de carbone, comportant au moins un élastomère diénique, une charge renforçante blanche ou colorée, un système de protection anti-photo-oxydant, cette composition étant caractérisée en ce que ledit système de protection est à base d'au moins:

(A) un 2,2'-méthylène-bis-[4-alkyle($C_1$ à $C_{10}$)-6-alkyle($C_1$ à $C_{12}$)phénol];
(B) un dialkylthiodipropionate dont les radicaux alkyles, identiques ou différents, sont des radicaux en $C_1$ à $C_{30}$, de préférence en $C_8$ à $C_{20}$;
(C) un 2-(2-hydroxyphényl)benzotriazole;
(D) une amine "HALS" dérivée de la 2,2,6,6-tétraméthylpipéridine.

L'invention a également pour objet les pneumatiques de couleur ou les articles en caoutchouc de couleur de tels pneumatiques, lorsqu'ils comportent une composition de caoutchouc conforme à l'invention, de tels articles étant en particulier des bandes de roulement, des sous-couches destinées par exemple à être placées sous ces bandes de roulement, des flancs, des protecteurs, des talons, plus généralement toute couche ou nappe de caoutchouc pouvant entrer dans la constitution des pneumatiques.

Par pneumatiques ou articles en caoutchouc "de couleur" ou "colorés", on entend dans la présente description des pneumatiques ou articles en caoutchouc dont une partie au moins est d'une couleur autre que le noir conventionnel, y compris d'une couleur blanche.

L'invention a d'autre part pour objet un procédé pour protéger contre le vieillissement photo-oxydant une composition de caoutchouc de pneumatique, blanche, claire ou colorée, dépourvue de noir de carbone, ce procédé étant caractérisé en ce qu'on incorpore par mélangeage à ladite composition, avant sa vulcanisation, un système anti-photo-oxydant tel que décrit ci-dessus.

L'invention a enfin pour objet l'utilisation d'un système anti-photo-oxydant répondant à la définition ci-dessus pour la protection contre la photo-oxydation de ces compositions de caoutchouc de pneumatique blanches, claires ou colorées.

L'invention ainsi que ses avantages seront aisément compris à la lumière de la description et des exemples de réalisation qui suivent.

## I. MESURES ET TESTS UTILISES

Les propriétés des compositions de caoutchouc sont évaluées comme indiqué ci-après. Lors des tests de photo-oxydation, de thermo-oxydation ainsi que de colorimétrie, les éprouvettes utilisées sont des éprouvettes non normalisées consistant en des lanières de caoutchouc de dimensions (L x 1 x e) égales à (110 x 15 x 2,5), en mm (millimètres).

### I-1. Essais de traction

Ces essais permettent de déterminer les contraintes d'élasticité et les propriétés à la rupture ; ceux effectués sur les mélanges cuits sont réalisés conformément à la norme AFNOR-NF-T46-002 de septembre 1988. On mesure les modules sécants (en MPa) à 10% d'allongement (M10) et à 100% d'allongement (M100). Sauf indication différente dans le texte, toutes ces mesures de traction sont effectuées dans les conditions normales de température et d'hygrométrie selon la norme AFNOR-NF-T40-101 de décembre 1979.

### I-2. Tests de dureté Shore A

Ces mesures permettent d'apprécier la dureté des compositions après cuisson, conformément à la norme ASTM D 2240-86.

### I-3. Pertes hystérétiques

Les pertes hystérétiques (PH) sont mesurées par rebond à 60°C au 6ème choc, et exprimées en % selon la relation suivante:

$$PH(\%) = 100[(W_0-W_1)/W_0],$$

avec $W_0$ : énergie fournie ; $W_1$ : énergie restituée.

I-4. Tests de photo-oxydation

Les compositions à l'état cuit sont soumises à un photo-vieillissement accéléré de la manière suivante : une face des éprouvettes est exposée pendant 12 jours sous 4 lampes à vapeur de mercure haute pression (MAZDA MA400) à 60°C, en enceinte SEPAP 12/24 (MPC).

On mesure ensuite les évolutions des propriétés mécaniques et colorimétriques. En particulier, les essais de traction après photo-vieillissement accéléré sont réalisés par extensométrie des éprouvettes à des contraintes de faibles allongements (10 % et 25 %), en première élongation, sur une machine Inströn 1122, à faible vitesse de traction (10 mm/min). Les contraintes mesurées sont notées F10 et F25.

I-5. Tests de thermo-oxydation

Ces essais permettent d'évaluer la résistance des matériaux testés à la thermo-oxydation. On mesure pour cela les paramètres M10, M100 et PH, après un vieillissement thermo-oxydant de 30 jours, à une température constante de 70°C, dans une étuve ventilée à l'air.

I-6. Tests colorimétriques

Les valeurs colorimétriques sont déterminées à l'aide d'un spectrocolorimètre Microflash 200 D DATA COLOR en configuration D65/10 (lumière du jour ; angle d'observation 10°). Les propriétés colorimétriques sont mesurées de manière connue, selon le manuel d'instruction du colorimètre (mai 1995), par analyse du spectre de réflectance des éprouvettes.

Ces mesures sont reportées dans le système "CIE LAB" des 3 coordonnées tridimensionnelles colorimétriques L*, a*, b*, système dans lequel:

- l'axe a* représente la coordonnée de chromaticité vert-rouge, avec une échelle allant de -100 (vert) à + 100 (rouge);
- l'axe b* représente la coordonnée de chromaticité bleu-jaune, avec une échelle allant de -100 (bleu) à + 100 (jaune);
- l'axe L* représente la coordonnée de luminosité, avec une échelle allant de 0 (noir) à 100 (blanc);
- $\Delta E = [(\Delta L^*)\ 2 + (\Delta a^*)\ 2 + (\Delta b^*)\ ^2]\ ^{1/2}$ représente l'écart colorimétrique global moyen de chaque échantillon par rapport à un témoin non vieilli ; plus ΔE est élevé, plus la composition a perdu de sa couleur initiale.

**II. CONDITIONS DE REALISATION DE L'INVENTION**

En plus des additifs habituels et éventuellement d'un agent colorant (ou plusieurs), les compositions selon l'invention comportent au moins un élastomère diénique, une charge blanche ou colorée à titre de charge renforçante, un système de protection anti-photo-oxydant, photo-stable et non-tachant vis-à-vis des compositions protégées, ledit système comportant au moins, en combinaison, les composés A, B, C et D énoncés précédemment.

II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Comme indiqué précédemment, la présente invention concerne en premier lieu la protection anti-photo-oxydante des compositions de pneumatique à base d'élastomères diéniques essentiellement insaturés. Parmi ces derniers, on utilise de préférence des homopolymères obtenus par polymérisation d'un monomère diène conjugué ayant de 4 à 12 atomes de carbone, ainsi que des copolymères obtenus par copolymérisation d'un ou plusieurs diènes conjugués entre eux, ou avec un ou plusieurs composés vinyle-aromatiques ayant de 8 à 20 atomes de carbone.

A titre de diènes conjugués conviennent notamment le butadiène-1,3, le 2-méthyl-1,3-butadiène, les 2,3-di (alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-sryrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Bien entendu, l'élastomère peut être couplé et/ou étoilé ou encore fonctionnalisé avec un agent de couplage et/ou d'étoilage ou de fonctionnalisation. L'élastomère peut également être du caoutchouc naturel ou un coupage à base de caoutchouc naturel avec tout élastomère, notamment diénique, synthétique.

De manière particulièrement préférentielle, l'élastomère diénique de la composition conforme à l'invention est choisi dans le groupe des élastomères diéniques fortement insaturés constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

Lorsque la composition conforme à l'invention est sous la forme d'une bande de roulement, l'élastomère diénique est de préférence un copolymère de butadiène-styrène préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère de butadiène-styrène étant éventuellement utilisé en mélange avec un polybutadiène possèdant de préférence plus de 90% de liaisons cis-1,4.

<u>II-2. Charge renforçante</u>

A titre de charge renforçante conviennent toutes les charges blanches (encore appelées charges claires) susceptibles de renforcer, seules ou en mélange entre elles, plus ou moins selon les applications visées, une composition de caoutchouc de pneumatique, comme par exemple de la silice, de l'alumine, des argiles, des hydrates ou oxydes d'aluminium et/ou de magnésium, la bentonite, le talc, la craie, le kaolin, l'oxyde de titane.

De manière préférentielle, le taux de charge renforçante est compris dans un domaine allant de 30 à 150 pce (parties en poids pour cent parties d'élastomère), plus préférentiellement de 30 à 100 pce, l'optimum étant différent selon les applications visées : le niveau de renforcement attendu sur un pneumatique vélo, par exemple, est bien entendu nettement inférieur à celui exigé sur un pneumatique apte à rouler à grande vitesse de manière soutenue, par exemple un pneu moto, un pneu pour véhicule de tourisme ou pour véhicule utilitaire tel que poids lourd.

De préférence, en particulier lorsque la composition de l'invention concerne un tel pneumatique apte à rouler à grande vitesse, la silice ($SiO_2$) ou l'alumine ($Al_2O_3$), voire les deux associées, constitue(nt) la majorité c'est-à-dire plus de 50% en poids de la charge renforçante totale. Plus préférentiellement encore, la silice et/ou l'alumine constituent plus de 80% en poids de cette charge renforçante totale.

La silice et/ou l'alumine peuvent constituer la totalité de la charge renforçante ; néanmoins, d'autres charges blanches peuvent, selon les applications visées, représenter de manière avantageuse une fraction plus ou moins importante de la charge renforçante.

Ainsi, on a constaté qu'une autre charge blanche associée par exemple à de la silice ou de l'alumine peut avoir pour effet d'opacifier les couleurs, en d'autres termes de diminuer le caractère clair, c'est-à-dire plus ou moins translucide des compositions chargées de silice ou d'alumine. Cette autre charge blanche est de préférence choisie parmi la craie, le talc ou le kaolin, plus préférentiellement le kaolin ; elle est préférentiellement utilisée à un taux de 2,5 à 12,5%, plus préférentiellement de 5 à 10% (% en poids par rapport au poids de silice et/ou alumine), selon les applications visées ; pour un taux inférieur à 2,5% l'effet est en général peu visible alors que pour des taux supérieurs à 12,5% les propriétés mécaniques des vulcanisats peuvent diminuer.

On a également constaté que l'utilisation d'oxyde de titane ($TiO_2$) a pour effet de donner un ton pastel, particulièrement esthétique, aux couleurs choisies ; le taux d'oxyde de titane varie de préférence de 0,5 à 7%, plus préférentiellement de 1 à 3% (% en poids par rapport au poids de silice et/ou d'alumine), selon les applications visées. Pour un taux inférieur à 0,5%, l'effet est en général peu visible alors que pour des taux supérieurs à 7% on s'expose à un risque d'effleurissement à la surface des vulcanisats.

Bien entendu, l'invention s'applique également aux cas où l'on choisit une charge renforçante colorée, compatible avec la couleur désirée pour le pneumatique, cette charge colorée pouvant être une charge naturellement colorée, ou encore obtenue par une opération de coloration préalable, par exemple une silice ou une alumine précolorée.

La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées, en particulier lorsque l'invention concerne des pneumatiques présentant une faible résistance au roulement. Par silice hautement dispersible, on entend toute silice ayant une aptitude très importante à la désagglomération et à la dispersion dans une matrice polymérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhône-Poulenc, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'alumine renforçante utilisée préférentiellement est une alumine hautement dispersible ayant une surface BET allant de 30 à 400 $m^2/g$, plus préférentiellement de 80 à 250 $m^2/g$, une taille moyenne de particules au plus égale à 500 nm, plus préférentiellement au plus égale à 200 nm, un taux élevé de fonctions réactives de surface Al-OH, telle que décrite dans la demande EP-A-0 810 258 précitée. Comme exemples non limitatifs de telles alumines renforçantes, on peut citer notamment les alumines A125, CR125, D65CR de la société Baïkowski.

L'état physique sous lequel se présente la charge blanche renforçante est indifférent, que ce soit sous forme de poudre, de microperles, de granulés, ou encore de billes. Bien entendu on entend également par charge blanche renforçante, de manière générale, des mélanges de différentes charges blanches renforçantes, en particulier de silices et/ou d'alumines hautement dispersibles telles que décrites ci-dessus.

On peut utiliser tout agent de couplage connu pour assurer la liaison entre la charge blanche renforçante et l'élastomère diénique, tel que des organosilanes, en particulier des alkoxysilanes polysulfurés comme les tétrasulfures de bis(trialkoxyle($C_1$-$C_4$)silylpropyl), notamment de bis(triméthoxysilylpropyl) ou de bis(triéthoxysilylpropyl), en particulier le dernier de ces composés, de formule $[(C_2H_5O)_3Si(CH_2)_3S_2]_2$, commercialisé par exemple par la société Degussa sous la dénomination Si69, ou par la société Osi sous la dénomination URC2.

II-3. Système anti-photo-oxydant

Comme énoncé précédemment, la composition de pneumatique conforme à l'invention est protégée contre le vieillissement photo-oxydant par un système anti-photo-oxydant, photo-stable et non-tachant vis-à-vis de cette composition, à base d'au moins:

(A) un 2,2'-méthylène-bis-[4-alkyle($C_1$ à $C_{10}$)-6-alkyle($C_1$ à $C_{12}$)phénol];
(B) un dialkylthiodipropionate dont les radicaux alkyles, identiques ou différents, sont des radicaux en $C_1$ à $C_{30}$, de préférence en $C_8$ à $C_{20}$;
(C) un 2-(2-hydroxyphényl)benzotriazole;
(D) une amine "HALS" dérivée de la 2,2,6,6-tétraméthylpipéridine.

Les composés phénoliques A sont des antioxydants connus. A titre de composés A préférentiels, on citera ceux répondant à la formule générale (I) suivante:

(I)

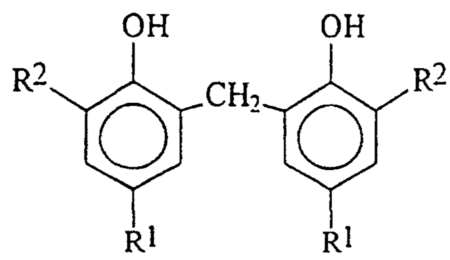

dans laquelle:

$R^1$ = alkyle en $C_1$ à $C_4$, de préférence méthyle ou éthyle;
$R^2$ = alkyle en $C_1$ à $C_6$, ou cycloalkyle en $C_5$ à $C_{12}$.

De préférence, le composé A est un 2,2'-méthylène-bis-[4-(méthyl ou éthyl)-6-alkyle($C_1$-$C_4$)phénol] ou un 2,2'-méthylène-bis-[4-(méthyl ou éthyl)-6-cycloalkyle($C_7$-$C_8$)phénol].

Le composé A est choisi avantageusement dans le groupe constitué par le 2,2'-méthylène-bis- [4-méthyl-6-t-butylphénol], le 2,2'-méthylène-bis-[4-éthyl-6-t-butylphénol], le 2,2'-méthylène- bis-[4-méthyl-6-cyclohéxylphénol], le 2,2'-méthylène-bis-[4-méthyl-6-alpha-méthyl- cyclohéxylphénol], le 2,2'-méthylène-bis-[4-méthyl-6-nonylphénol]. Plus préférentiellement encore, le composé A sélectionné est le 2,2'-méthylène-bis-[4-(méthyl)-6-t-butylphénol].

Les dialkylthiodipropionates (Alkyle-O-CO-$CH_2$-$CH_2$-S-$CH_2$-$CH_2$-CO-O-Alkyle) sont également des antioxydants connus. A titre de composés B préférentiels, on citera notamment ceux dont les deux radicaux alkyles sont des radicaux identiques en $C_8$-$C_{20}$, avantageusement le dilauryl($C_{12}$)-thiodipropionate, ou le distéaryl($C_{18}$)-thiodipropionate (ou dioctadécyl-2,2'- thiodipropionate).

Le composé C est un absorbeur U.V. ("UVA") de la famille connue des 2-(2-hydroxyphényl)benzotriazoles, répondant de préférence à la formule générale (II) suivante:

(II)

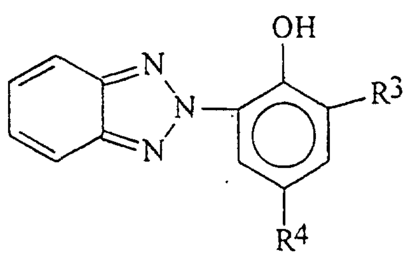

dans laquelle $R^3$ et $R^4$, identiques ou différents, représentent divers radicaux hydrocarbonés, à chaîne droite ou ramifiée, substitués ou non substitués, notamment des alkyles en $C_1$ à $C_4$, en particulier le méthyle ou l'éthyle, ou des alkylaryles en $C_7$ à $C_{20}$. Le noyau benzotriazole peut être lui-même substitué en position 4, par exemple halogéné, notamment chloré.

Le composé D est une amine "HALS" ("Hindered Amine Light Stabilizers") dérivée de la 2.2,6,6-tétraméthylpipéridine, répondant de préférence à la formule générale (III) qui suit (avec X choisi de préférence parmi l'hydrogène ou un groupement hydrocarboné comportant de 1 à 20 atomes de carbone, par exemple un alcoxyle en $C_1$-$C_{20}$):

(III)

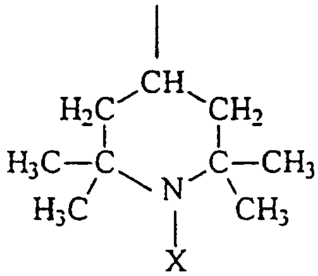

De telles amines HALS peuvent être polymériques, elles peuvent porter une très grande variété de substituants en position 4 ; elles sont bien connues dans le domaine des stabilisants U.V. et ont été décrites dans un grand nombre de documents, par exemple dans "*Polymer Stabilization and Degradation*", ACS symposium series 280, Ed. P.P. Klemchuk (1985).

Le système anti-photo-oxydant tel que décrit ci-dessus s'est avéré suffisamment efficace à lui seul pour la protection anti-photo-oxydante des compositions de pneumatique conformes à l'invention ; il peut donc constituer avantageusement le seul système anti-photo-oxydant, c'est-à-dire à la fois anti-(thermo)oxydant et anti-U.V., présent dans les compositions conformes à l'invention.

Selon les applications visées et la nature de l'élastomère diénique à protéger, les composés A, B, C et D sont présents dans les compositions conformes à l'invention aux taux préférentiels qui suivent (en pce):

A: 1 à 5, plus préférentiellement 1,5 à 2,5;
B: 0,5 à 3, plus préférentiellement 0,5 à 1,5;
C: 0,5 à 3, plus préférentiellement 0,5 à 1,5;
D: 0,5 à 3, plus préférentiellement 0,5 à 1,5,

la teneur totale du système anti-photo-oxydant (A+B+C+D) étant de préférence comprise dans un domaine allant de 2,5 à 10 pce, plus préférentiellement de 3,0 à 7,0 pce.

En dessous des taux minima indiqués, l'effet du système peut être insuffisant, alors qu'au delà des taux maxima indiqués, on n'observe plus d'amélioration de la protection alors que les coûts de la formulation continuent d'augmenter.

II-4. Agent colorant

Pour la mise en oeuvre de l'invention, on peut utiliser tout type d'agent colorant connu de l'homme du métier, cet agent colorant pouvant être organique ou inorganique, soluble ou non dans les compositions conformes à l'invention. A titre d'exemple, on peut citer des colorants minéraux tels que par exemple des métaux en poudre, notamment du cuivre ou de l'aluminium en poudre, ou divers oxydes métalliques, notamment des silicates, des aluminates, des titanates, des oxydes ou hydroxydes de fer, des oxydes mixtes d'éléments métalliques différents tels que Co, Ni, Al, Zn. On peut citer également des pigments organiques tels que des indanthrones, des dikéto-pyrrolo-pyrroles ou des condensés diazo, des pigments organométalliques tels que des phtalocyanines.

La couleur des compositions conformes à l'invention peut ainsi varier dans une très large gamme, à titre d'exemple dans différentes teintes de rouge, orange, vert, jaune, bleu ou encore de marron ou de gris. On peut également ne pas utiliser d'agent colorant, et choisir de garder la couleur d'origine de la charge renforçante, que cette dernière soit blanche ou colorée.

II-5. Additifs divers

Bien entendu, les compositions conformes à l'invention contiennent outre les composés décrits précédemment tout ou partie des constituants habituellement utilisés dans les compositions de caoutchouc diénique de pneumatiques, comme par exemple des plastifiants, un système de réticulation à base soit de soufre, soit de donneurs de soufre, des accélérateurs de vulcanisation, des huiles d'extension, du type aromatiques, naphténiques ou paraffiniques, d'autres agents antidégradants non-tachants, en particulier des cires antiozone et des antiozonants actifs chimiquement, notamment des acétals cycliques, ou encore divers agents anti-fatigue.

Les compositions conformes à l'invention peuvent contenir des agents de couplage et/ou de recouvrement

de la charge renforçante autres que ceux précités, en combinaison ou à la place de ces derniers, comme par exemple des polyols, des amines, des alkoxysilanes.

### III. EXEMPLES DE REALISATION DE L'INVENTION

Dans les exemples qui suivent, les compositions de caoutchouc sont préparées en mettant en oeuvre les élastomères diéniques selon des techniques tout à fait connues, par travail thermomécanique dans un mélangeur interne à palettes suivi d'un mélangeage sur mélangeur externe.

A titre d'exemple on procède de la manière suivante: on introduit l'élastomère ou le mélange d'élastomères dans un mélangeur interne, rempli à 70 % et dont la température est d'environ 60°C, puis après un temps approprié de malaxage, par exemple de l'ordre de 1 minute, on ajoute tous les autres ingrédients à l'exception du système de vulcanisation ; on poursuit le travail thermomécanique de malaxage jusqu'à une température de tombée de 175°C ; on récupère le mélange ainsi obtenu puis on ajoute le système de vulcanisation sur un mélangeur externe (homo-finisseur) à 30°C. La vulcanisation est effectuée à 150°C pendant 45 minutes.

On compare dans cet essai sept compositions de caoutchouc de couleur rouge destinées à la fabrication de bandes de roulement de pneumatiques.

Ces compositions sont identiques à l'exception du système de protection anti-photo-oxydant qui est absent dans le cas de la composition No 1 (témoin non protégé), à base d'un antioxydant type PPD pour la composition No2 (composition de référence), et à base de différentes associations faisant intervenir tout ou partie des composés A à D pour les autres compositions.

La composition No7 est la seule composition conforme à l'invention, comportant les 4 composés (A+B+C+D).

Les composés A à D utilisés, tous disponibles commercialement, sont les suivants:

(A): 2,2'-méthylène-bis-(4-méthyl-6-t-butylphénol);
(B): distéarylthiodipropionate;
(C): 2-(2-hydroxyphényl)benzotriazole selon la formule (II) dans laquelle:

- $R^3$ = t-butyl;
- $R^4 = CH_2-CH_2-CO-O-[(CH_2)_2-O]_n-H$;

(D): amine "HALS" tertiaire dérivée de 2,2,6,6-tetraméthylpipéridine, selon la formule (III) dans laquelle:

- substituant en position 1 (X): $O-C_8H_{17}$ (capryloxyle),
- substituant en position 4: $[O-CO-(CH_2)_4]_2$.

L'élastomère diénique est un coupage SBR/BR. L'élastomère SBR (copolymère de styrène butadiène) est préparé en solution, et comprend 25,6% de styrène, 60% de motifs polybutadiènc 1-2 et 23% de motifs polybutadiène trans 1-4. L'élastomère BR (polybutadiène) est un produit commercial, comportant plus de 90% de liaisons cis-1,4 (environ 98%).

Les tableaux 1 à 3 donnent successivement la formulation des différentes compositions (tableau 1 - taux des différents produits exprimés en pce), leurs propriétés après cuisson et l'évolution de leurs propriétés mécaniques après thermo-oxydation et après photo-oxydation (tableau 2), et enfin l'évolution de leurs propriétés colorimétriques après photo-oxydation (tableau 3).

A la lecture de ces différents tableaux de résultats, on peut faire les constatations suivantes:

- les propriétés classiques de caoutchouterie (tableau 2), après cuisson et avant vieillissement, sont peu différentes d'une composition à l'autre, qu'elles soient protégées ou non par un ou plusieurs agents antidégradants;

- après thermo-oxydation (tableau 2), on constate que les résultats obtenus sur la composition conforme à l'invention (No7) sont ceux qui sont les plus proches des résultats obtenus avec l'agent antioxydant classique (6-PPD) servant de référence. Il doit être noté ici que les plus faibles % d'évolution de M10 et M100, constatés sur le témoin non protégé (composition No1), ne sont pas révélateurs ici d'une plus faible dégradation ; au contraire, associés à des pertes PH qui ne diminuent pas, ces faibles % d'évolution sont liés de manière connue de l'homme du métier à une dégradation par scission des chaînes élastomériques, sur la composition témoin;

- après photo-oxydation (tableau 2), on note là encore que les meilleurs résultats sont obtenus grâce au système anti-photo-oxydant combinant les 4 composés A, B, C et D (composition No7) ; ces résultats sont comparables à ceux obtenus sur la composition de référence No2 : voir évolution de la dureté Shore A, de F10, et plus particulièrement de F25;

- concernant enfin l'évolution des propriétés colorimétriques (tableau 3), on constate que la composition No2 protégée par le dérivé PPD se dégrade de manière très importante et rédhibitoire (noircissement prononcé), alors que la composition No7 conforme à l'invention montre par contre une excellente stabilité de couleur (aucun tachage visible), quasiment équivalente à celle enregistrée sur la composition témoin dépourvue d'agent antidégradant ; le paramètre $\Delta E$ est proche de 10 pour la composition conforme à l'invention, alors qu'il est supérieur à 30 pour la composition à base du dérivé PPD.

Cet essai montre clairement que les composés A à D, dans la composition No7 conforme à l'invention, renforcent mutuellement leurs effets, permettant ainsi d'obtenir un bien meilleur compromis de propriétés après vieillissement que pour les autres compositions.

Enfin, des tests de roulage de longue durée ont été pratiqués sur des véhicules tourisme avec de nombreux pneumatiques de couleur conformes à l'invention (dimensions 155/70 SR 13 ; 175/70 SR 13 ; 185/65 HR 14) ; ces pneumatiques comportaient des bandes de roulement et/ou des flancs colorés de différentes couleurs (rouge, jaune ou vert).

Ces tests de roulage ont conduit aux résultats suivants:

- propriétés d'endurance équivalentes à celles observées sur des compositions conventionnelles de couleur noire, chargées au moins en partie de noir de carbone;

- performances en adhérence, notamment sur sol mouillé, et en résistance au roulement meilleures que celles obtenues avec des compositions conventionnelles chargées de noir de carbone, ces performances étant aussi bonnes que celles obtenues sur des compositions à base de silice telles que décrites dans la demande EP-A-0 501 227 précitée;

- pas de dégradation des couleurs après un roulage de plusieurs dizaines de milliers de kilomètres.

En conclusion, les compositions conformes à l'invention, grâce à une combinaison synergique de quatre composés spécifiques, offrent aux pneumatiques de couleur une très bonne résistance au vieillissement atmosphérique dû à l'action combinée de l'oxygène et de la lumière U.V., cette résistance étant comparable à celle obtenue à l'aide d'un dérivé du type PPD, tout en garantissant à ces pneumatiques une excellente stabilité de couleur impossible avec un agent antidégradant conventionnel type 6-PPD.

Tableau 1

| Composition No : | 1 | 2 | 3 | 4 | 5 | 6 | 7 |
|---|---|---|---|---|---|---|---|
| SBR (1) | 50 | 50 | 50 | 50 | 50 | 50 | 50 |
| BR (2) | 50 | 50 | 50 | 50 | 50 | 50 | 50 |
| Silice (3) | 80 | 80 | 80 | 80 | 80 | 80 | 80 |
| Kaolin naturel | 5 | 5 | 5 | 5 | 5 | 5 | 5 |
| Agent couplage (4) | 6,4 | 6,4 | 6,4 | 6,4 | 6,4 | 6,4 | 6,4 |
| Huile paraffinique | 25 | 25 | 25 | 25 | 25 | 25 | 25 |
| ZnO | 2,5 | 2,5 | 2,5 | 2,5 | 2,5 | 2,5 | 2,5 |
| 6-PPD(5) | | 1,5 | | | | | |
| Composé A (6) | | | 2 | 2 | 2 | 2 | 2 |
| Composé B (7) | | | | 1 | 1 | 1 | 1 |
| Composé C (8) | | | | | 1 | | 1 |

(1): copolymère de butadiène-styrène;
(2): polybutadiène Europrene® Cis (société Enichem);
(3): Silice Zeosil® 1165MP (société Rhône-Poulenc);
(4): Si69® (société Degussa);
(5): N-1,3-diméthylbutyl-N'-phényl-p-phénylènediamine;
(6): 2,2'-methylene-bis(4-methyl-6-t-butylphénol) (Vulkanox® BKF de Bayer);
(7): diocta-décyl-2,2-thiodipropionate (Irganox® PS 802 de Ciba-Geigy);
(8): 2-(2-hydroxyphényl)benzotriazole (UVA Tinuvin® 213 de Ciba-Geigy);

Tableau 1 (suite)

| Composition No : | 1 | 2 | 3 | 4 | 5 | 6 | 7 |
|---|---|---|---|---|---|---|---|
| Composé D (9) | | | | | | 1 | 1 |
| Cire (10) | 1,5 | 1,5 | 1,5 | 1,5 | 1,5 | 1,5 | 1,5 |
| Colorant (11) | 2 | 2 | 2 | 2 | 2 | 2 | 2 |
| Acide stéarique | 2 | 2 | 2 | 2 | 2 | 2 | 2 |
| Soufre | 1,1 | 1,1 | 1,1 | 1,1 | 1,1 | 1,1 | 1,1 |
| CBS (12) | 2 | 2 | 2 | 2 | 2 | 2 | 2 |
| DPG (13) | 1,5 | 1,5 | 1,5 | 1,5 | 1,5 | 1,5 | 1,5 |

(9): amine HALS dérivée de 2,2,6,6-tétraméthylpipéridine (Tinuvin® 123 de Ciba-Geigy)
(10): cire antiozone (Redezon® 500 de la société Repsol)
(11): pigment Cromophtal® Red BRN CI - Red 144 (société Ciba-Geigy)
(12): N-cyclohexyl-benzothiazyl-sulfénamide
(13): 1,3-diphénylguanidine

Tableau 2

| Composition No | 1 | 2 | 3 | 4 | 5 | 6 | 7 |
|---|---|---|---|---|---|---|---|
| Avant thermo-oxydation: | | | | | | | |
| M10 (MPa) | 5 | 5,1 | 4,9 | 5,4 | 5,2 | 5,3 | 5,4 |
| M100 (MPa) | 2 | 2,1 | 2 | 2,1 | 2 | 2,2 | 2,2 |
| dureté Shore A | 65 | 65 | 66 | 68 | 66 | 66 | 65 |
| PH60 | 31 | 30 | 31 | 32 | 32 | 32 | 32 |
| Après thermo-oxydation (30 jours à 70°C): | | | | | | | |
| M10 (Mpa) | 5,5 | 5,9 | 6,2 | 6,3 | 6,2 | 6,3 | 6,2 |
| % d'évolution | 10 | 16 | 27 | 17 | 19 | 19 | 15 |
| M100 (Mpa) | 2,5 | 2,8 | 2,8 | 2,8 | 2,7 | 3,0 | 2,9 |
| % d'évolution | 25 | 33 | 40 | 33 | 35 | 36 | 32 |
| PH | 33 | 26 | 28 | 27 | 27 | 28 | 27 |
| Avant photo-oxydation: | | | | | | | |
| F10 (MPa) | 0,55 | 0,59 | 0,58 | 0,6 | 0,6 | 0,62 | 0,55 |
| F25 (MPa) | 0,85 | 0,88 | 0,86 | 0,9 | 0,87 | 0,88 | 0,79 |
| Après photo-oxydation (12 jours): | | | | | | | |
| F10 (MPa) | 0,95 | 0,95 | 0,97 | 1,02 | 0,99 | 1,03 | 0,9 |
| % d'évolution | 72 | 61 | 67 | 70 | 65 | 66 | 64 |
| F25 (MPa) | 1,45 | 1,37 | 1,44 | 1,48 | 1,42 | 1,42 | 1,23 |
| % d'évolution | 71 | 56 | 67 | 64 | 63 | 61 | 56 |
| dureté Shore A | 78 | 76,8 | 78,5 | 81 | 77,8 | 78,5 | 76 |
| % d'évolution | 20 | 18 | 19 | 19 | 18 | 19 | 17 |

Tableau 3

| Composition N° | 1 | 2 | 7 |
|---|---|---|---|
| Propriétés colorimétriques initiales: | | | |
| L* | +38 | +34 | +35 |
| a* | +36 | +31 | +34 |
| b* | +22 | +18 | +20 |
| Après photo-oxydation 12 jours: | | | |
| ΔL | -5 | -14 | -5 |
| Δa* | -5 | -28 | -8 |
| Δb* | -2 | -14 | -5 |
| ΔE | +7 | +34 | +11 |

**Revendications**

**1.** Composition de caoutchouc de pneumatique, blanche, claire ou colorée, dépourvue de noir de carbone, comportant au moins un élastomère diénique, une charge renforçante blanche ou colorée, un système de protection anti-photo-oxydant, **caractérisée en ce que** ledit système de protection est à base d'au moins:

(A) un 2,2'-méthylène-bis-[4-alkyle($C_1$ à $C_{10}$)-6-alkyle($C_1$ à $C_{12}$)phénol];
(B) un dialkylthiodipropionate dont les radicaux alkyles, identiques ou différents, sont des radicaux en $C_1$ à $C_{30}$, de préférence en $C_8$ à $C_{20}$;
(C) un 2-(2-hydroxyphényl)benzotriazole;
(D) une amine "HALS" dérivée de la 2,2,6,6-tétraméthylpipéridine.

**2.** Composition selon la revendication 1 dans laquelle le composé A est un 2,2'-méthylène-bis-[4-alkyle($C_1$-$C_4$)-6-alkyle($C_1$-$C_7$)phénol].

**3.** Composition selon la revendication 2 dans laquelle le composé A est le 2,2'-méthylène-bis-[4-(méthyl)-6-t-butylphénol].

**4.** Composition selon l'une quelconque des revendications 1 à 3, dans laquelle le composé B est un dialkyl($C_8$ à $C_{20}$) thiodipropionate.

**5.** Composition selon selon la revendication 4, dans laquelle le composé B est le dilaurylthiodipropionate ou le distéarylthiodipropionate.

**6.** Composition selon l'une quelconque des revendications 1 à 5, dans laquelle l'élastomère diénique est choisi dans le groupe constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

**7.** Composition selon la revendication 6, dans laquelle l'élastomère diénique est un copolymère de butadiène-styrène préparé en solution ayant une teneur en styrène comprise entre 20 et 30 % en poids, une teneur en liaisons vinyliques de la partie butadiénique comprise entre 15 % et 65 %, une teneur en liaisons trans-1,4 comprise entre 15 % et 75 % et une température de transition vitreuse entre -20°C et -55°C, ce copolymère de butadiène-styrène étant éventuellement utilisé en mélange avec un polybutadiène possèdant de préférence plus de 90 % de liaisons cis-1,4.

**8.** Composition selon l'une quelconque des revendications 1 à 7, dans laquelle la charge renforçante est constituée majoritairement de silice et/ou d'alumine.

**9.** Composition selon la revendication 8, dans laquelle est associée à la silice et/ou l'alumine une autre charge blanche

choisie parmi la craie, le talc ou le kaolin, de préférence à un taux de 2,5 à 12,5% (% en poids par rapport au poids de silice et/ou alumine).

**10.** Composition selon la revendication 9, le taux de l'autre charge blanche choisie parmi la craie, le talc ou le kaolin, étant de 5% à 10% (% en poids par rapport au poids de silice et/ou alumine).

**11.** Composition selon les revendications 8 ou 9 ou 10, dans laquelle est associée à la silice et/ou l'alumine de l'oxyde de titane, de préférence à un taux de 0,5 à 7% (% en poids par rapport au poids de silice et/ou alumine).

**12.** Composition selon la revendication 11, le taux d'oxyde de titane étant de 1% à 3%.

**13.** Composition selon l'une quelconque des revendications 1 à 12, les composés A, B, C et D étant présents aux taux suivants :

A: 1,0 à 5 pce ;
B : 0,5 à 3 pce ;
C : 0,5 à 3 pce ;
D: 0,5 à 3 pce,

la teneur totale du système anti-photo-oxydant (A+B+C+D) étant de préférence comprise dans un domaine allant de 2,5 à 10 pce.

**14.** Composition selon la revendication 13, les composés A, B, C et D étant présents aux taux suivants :

A : 1,5 à 2,5 pce ;
B : 0,5 à 1,5 pce ;
C : 0,5 à 1,5 pce ;
D : 0,5 à 1,5 pce.

**15.** Composition selon les revendications 13 ou 14, la teneur totale du système anti-photo-oxydant (A+B+C+D) étant comprise dans un domaine allant de 3,0 à 7,0 pce.

**16.** Pneumatique de couleur ou article en caoutchouc d'un tel pneumatique, **caractérisé en ce qu'**il comporte une composition de caoutchouc conforme à l'une quelconque des revendications 1 à 15.

**17.** Article en caoutchouc selon la revendication 16, choisi dans le groupe constitué par les bandes de roulement, les sous-couches, les flancs, les protecteurs et les talons.

**18.** Procédé pour protéger contre le vieillissement photo-oxydant une composition de caoutchouc de pneumatique blanche, claire ou colorée et dépourvue de noir de carbone,
**caractérisé en ce qu'**on incorpore par mélangeage à ladite composition, avant sa vulcanisation, un système anti-photo-oxydant à base d'au moins:

(A) un 2,2'-méthylène-bis-[4-alkyle($C_1$ à $C_{10}$)-6-alkyle($C_1$ à $C_{12}$)phénol];
(B) un dialkylthiodipropionate dont les radicaux alkyles, identiques ou différents, sont des radicaux en $C_1$ à $C_{30}$, de préférence en $C_8$ à $C_{20}$;
(C) un 2-(2-hydroxyphényl)benzotriazole;
(D) une amine "HALS" dérivée de la 2,2,6,6-tétraméthylpipéridine.

**19.** Procédé selon la revendication 18, dans lequel le composé A est un 2,2'-méthylène-bis-[4-alkyle($C_1$-$C_4$)-6-alkyle ($C_1$-$C_7$)phénol].

**20.** Procédé selon la revendication 19, dans lequel le composé A est le 2,2'-méthylène-bis-[4-(méthyl)-6-t-butylphénol].

**21.** Procédé selon l'une quelconque des revendications 18 à 20, dans lequel le composé B est un dialkyl($C_8$ à $C_{20}$) thiodipropionate.

**22.** Procédé selon la revendication 21, dans lequel le composé B est le dilaurylthiodipropionate ou le distéarylthiodipropionate.

**23.** Utilisation, pour la protection contre la photo-oxydation des compositions de caoutchouc de pneumatique blanches, claires ou colorées et dépourvues de noir de carbone, d'un système anti-photo-oxydant à base d'au moins:

(A) un 2,2'-méthylène-bis-[4-alkyle($C_1$ à $C_{10}$)-6-alkyle($C_1$ à $C_{12}$)phénol];
(B) un dialkylthiodipropionate dont les radicaux alkyles, identiques ou différents, sont des radicaux en $C_1$ à $C_{30}$, de préférence en $C_8$ à $C_{20}$;
(C) un 2-(2-hydroxyphényl)benzotriazole;
(D) une amine "HALS" dérivée de la 2,2,6,6-tétraméthylpipéridine.

**24.** Utilisation selon la revendication 23, dans lequel le composé A est un 2,2'-méthylène-bis-[4-alkyle($C_1$-$C_4$)-6-alkyle ($C_1$-$C_7$)phénol].

**25.** Utilisation selon la revendication 24, dans laquelle le composé A est le 2,2'-méthylène-bis-[4-(méthyl)-6-t-butylphénol].

**26.** Utilisation selon l'une quelconque des revendications 23 à 25, dans laquelle le composé B est un dialkyl($C_8$ à $C_{20}$) thiodipropionate.

**27.** Utilisation selon la revendication 26, dans laquelle le composé B est le dilaurylthiodipropionate ou le distéarylthiodipropionate.

## Patentansprüche

**1.** Weiße, helle oder gefärbte, rußfreie Kautschukzusammensetzung für Luftreifen, die mindestens ein Dien-Elastomer, einen weißen oder gefärbten verstärkenden Füllstoff, ein Schutzsystem zum Schutz vor Photooxidation umfaßt, **dadurch gekennzeichnet, daß** das Schutzsystem basiert auf mindestens

(A) einem 2,2'-Methylenbis[4-($C_1$-$C_{10}$)-alkyl-6-($C_1$-$C_{12}$)-alkylphenol];
(B) einem Dialkylthiodipropionat, dessen Alkylreste, die gleich oder verschieden sind, $C_1$-$C_{30}$- und vorzugsweise $C_8$-$C_{20}$-Reste sind;
(C) einem 2-(2-Hydroxyphenyl)-benzotriazol;
(D) einem "HALS"-Amin, das von 2,2,6,6-Tetramethylpiperidin abgeleitet ist.

**2.** Zusammensetzung nach Anspruch 1, wobei die Verbindung A ein 2,2'-Methylenbis[4-($C_1$-$C_4$)-alkyl-6-($C_1$-$C_7$)-alkylphenol] ist.

**3.** Zusammensetzung nach Anspruch 2, wobei es sich bei der Verbindung A um 2,2'-Methylenbis[4-(methyl)-6-*tert*.-butylphenol] handelt.

**4.** Zusammensetzung nach einem der Ansprüche 1 bis 3, wobei die Verbindung B ein Di-($C_8$-$C_{20}$)-alkylthiodipropionat ist.

**5.** Zusammensetzung nach Anspruch 4, wobei es sich bei der Verbindung B um Dilaurylthiodipropionat oder Distearylthiodipropionat handelt.

**6.** Zusammensetzung nach einem der Ansprüche 1 bis 5, wobei das Dien-Elastomer unter den Polybutadienen, den Polyisoprenen und Naturkautschuk, den Butadien-Styrol-Copolymeren, den Butadien-Isopren-Copolymeren, den Isopren-Styrol-Copolymeren, den Butadien-Styrol-Isopren-Copolymeren und den Gemischen aus zwei oder mehreren dieser Verbindungen ausgewählt ist.

**7.** Zusammensetzung nach Anspruch 6, wobei das Dien-Elastomer ein Butadien-Styrol-Copolymer ist, das in Lösung hergestellt wird, einen Styrolgehalt von 20 bis 30 Gew.-%, einen Anteil an Vinylbindungen des Butadienteils von 15 bis 65 %, einen Anteil an *trans*-1,4-Bindungen von 15 bis 75 % und eine Glasübergangstemperatur von -20 bis -55 °C aufweist, wobei dieses Butadien-Styrol-Copolymer gegebenenfalls im Gemisch mit einem Polybutadien verwendet wird, das vorzugsweise mehr als 90 % *cis*-1,4-Bindungen aufweist.

**8.** Zusammensetzung nach einem der Ansprüche 1 bis 7, wobei der verstärkende Füllstoff überwiegend aus Kieselsäure und/oder Aluminiumoxid besteht.

**9.** Zusammensetzung nach Anspruch 8, wobei ein weiterer weißer Füllstoff mit der Kieselsäure und/oder dem Aluminiumoxid kombiniert ist, der unter Kreide, Talk und Kaolin ausgewählt ist, vorzugsweise in einem Anteil von 2,5 bis 12,5 % (Gew.-%, bezogen auf das Gewicht der Kieselsäure und/oder des Aluminiumoxids).

**10.** Zusammensetzung nach Anspruch 9, wobei der Anteil des weiteren weißen Füllstoffs, der unter Kreide, Talk und Kaolin ausgewählt ist, im Bereich von 5 bis 10 % liegt (Gew.-%, bezogen auf das Gewicht der Kieselsäure und/oder des Aluminiumoxids).

**11.** Zusammensetzung nach Anspruch 8 oder 9 oder 10, wobei Titandioxid, vorzugsweise in einem Anteil von 0,5 bis 7 % (Gew.-%, bezogen auf das Gewicht der Kieselsäure und/oder des Aluminiumoxids), mit der Kieselsäure und/oder dem Aluminiumoxid kombiniert ist.

**12.** Zusammensetzung nach Anspruch 11, wobei der Anteil des Titandioxids im Bereich von 1 bis 3 % liegt.

**13.** Zusammensetzung nach einem der Ansprüche 1 bis 12, wobei die Verbindungen A, B, C und D in den folgenden Mengenanteilen enthalten sind:

A: 1,0 bis 5 pce;
B: 0,5 bis 3 pce;
C: 0,5 bis 3 pce;
D: 0,5 bis 3 pce,

wobei der Mengenanteil des Systems zum Schutz vor Photooxidation aus den Verbindungen A+B+C+D vorzugsweise im Bereich von 2,5 bis 10 pce liegt.

**14.** Zusammensetzung nach Anspruch 13, wobei die Verbindungen A, B, C und D in den folgenden Mengenanteilen enthalten sind:

A: 1,5 bis 2,5 pce;
B: 0,5 bis 1,5 pce;
C: 0,5 bis 1,5 pce;
D: 0,5 bis 1,5 pce.

**15.** Zusammensetzung nach Anspruch 13 oder 14, wobei der Mengenanteil des Systems zum Schutz vor Photooxidation aus den Verbindungen A+B+C+D im Bereich von 3,0 bis 7,0 pce liegt.

**16.** Gefärbter Luftreifen oder gefärbtes Teil aus Kautschuk eines derartigen Luftreifens, **dadurch gekennzeichnet, daß** er/es eine Kautschukzusammensetzung nach einem der Ansprüche 1 bis 15 enthält.

**17.** Teil aus Kautschuk nach Anspruch 16, das unter Laufstreifen, Unterschichten, Seitenwänden, Protektoren und Wülsten ausgewählt ist.

**18.** Verfahren zum Schützen einer weißen, hellen oder farbigen und rußfreien Kautschukzusammensetzung für Luftreifen vor photooxidativer Alterung, **dadurch gekennzeichnet, daß** durch Vermischen mit der Zusammensetzung vor deren Vulkanisation ein System zum Schutz vor Photooxidation eingebracht wird, das basiert auf mindestens:

(A) einem 2,2'-Methylenbis[4-($C_1$-$C_{10}$)-alkyl-6-($C_1$-$C_{12}$]-alkylphenol];
(B) einem Dialkylthiodipropionat, dessen Alkylreste, die gleich oder verschieden sind, $C_1$-$C_{30}$- und vorzugsweise $C_8$-$C_{20}$-Reste sind;
(C) einem 2-(2-Hydroxyphenyl)-benzotriazol;
(D) einem "HALS"-Amin, das von 2,2,6,6-Tetramethylpiperidin abgeleitet ist.

**19.** Verfahren nach Anspruch 18, wobei die Verbindung A ein 2,2'-Methylenbis[4-($C_1$-$C_4$)-alkyl-6-($C_1$-$C_7$)-alkylphenol] ist.

**20.** Verfahren nach Anspruch 19, wobei es sich bei der Verbindung A um 2,2'-Methylenbis[4-(methyl)-6-*tert*.-butylphenol] handelt.

**21.** Verfahren nach einem der Ansprüche 18 bis 20, wobei die Verbindung B ein Di-($C_8$-$C_{20}$)-alkylthiodipropionat ist.

**22.** Verfahren nach Anspruch 21, wobei es sich bei der Verbindung B um Dilaurylthiodipropionat oder Distearylthiodipropionat handelt.

**23.** Verwendung eines Systems zum Schutz vor Photooxidation, das basiert auf mindestens:

(A) einem 2,2'-Methylenbis[4-($C_1$-$C_{10}$)-alkyl-6-($C_1$-$C_{12}$)-alkylphenol];
(B) einem Dialkylthiodipropionat, dessen Alkylreste, die gleich oder verschieden sind, $C_1$-$C_{30}$- und vorzugsweise $C_8$-$C_{20}$-Reste sind;
(C) einem 2-(2-Hydroxyphenyl)-benzotriazol;
(D) einem "HALS"-Amin, das von 2,2,6,6-Tetramethylpiperidin abstammt.

zum Schutz von weißen, hellen oder gefärbten und rußfreien Kautschukzusammensetzungen für Luftreifen vor photooxidativer Alterung.

**24.** Verwendung nach Anspruch 23, wobei die Verbindung A ein 2,2'-Methylenbis[4-($C_1$-$C_4$)-alkyl-6-($C_1$-$C_7$)-alkylphenol] ist.

**25.** Verwendung nach Anspruch 24, wobei es sich bei der Verbindung A um 2,2'-Methylenbis[4-(methyl)-6-tert.-butylphenol] handelt.

**26.** Verwendung nach einem der Ansprüche 23 bis 25, wobei die Verbindung B ein Di-($C_8$-$C_{20}$)-alkylthiodipropionat ist.

**27.** Verwendung nach Anspruch 26, wobei es sich bei der Verbindung B um Dilaurylthiodipropionat oder Distearylthiodipropionat handelt.

## Claims

**1.** A white, clear or coloured tyre rubber composition devoid of carbon black, comprising at least one diene elastomer, a white or coloured reinforcing filler and an anti-photo-oxidising protection system, **characterised in that** said protection system is based on at least:

(A) a 2,2'-methylene-bis-[4-($C_1$ to $C_{10}$)alkyl-6-($C_1$ to $C_{12}$) alkylphenol];
(B) a dialkyl thiodipropionate, the alkyl radicals of which, which may be identical or different, are $C_1$ to $C_{30}$ radicals, preferably $C_8$ to $C_{20}$ radicals;
(C) a 2-(2-hydroxyphenyl)benzotriazole;
(D) an "HALS" amine derived from 2,2,6,6-tetramethyl piperidine.

**2.** A composition according to Claim 1, in which compound A is a 2,2'-methylene-bis-[4-($C_1$-$C_4$)alkyl-6-($C_1$-$C_7$)alkyl phenol].

**3.** A composition according to Claim 2, in which compound A is 2,2'-methylene-bis-[4-(methyl)-6-t-butylphenol].

**4.** A composition according to any one of Claims 1 to 3, in which compound B is a ($C_8$ to $C_{20}$)dialkyl thiodipropionate.

**5.** A composition according to Claim 4, in which compound B is dilauryl thiodipropionate or distearyl thiodipropionate.

**6.** A composition according to any one of Claims 1 to 5, in which the diene elastomer is selected from the group which consists of polybutadienes, polyisoprenes or natural rubber, butadiene-styrene copolymers, butadiene-isoprene copolymers, isoprene-styrene copolymers, butadiene-styrene-isoprene copolymers, or a mixture of two or more of these compounds.

**7.** A composition according to Claim 6, in which the diene elastomer is a butadiene-styrene copolymer prepared in

solution having a styrene content of between 20% and 30% by weight, a content of vinyl bonds of the butadiene fraction of between 15% and 65%, a content of trans-1,4 bonds of between 15% and 75%, and a glass transition temperature of between -20°C and -55°C, this butadiene-styrene copolymer possibly being used in a mixture with a polybutadiene having preferably more than 90% cis-1,4 bonds.

**8.** A composition according to any one of Claims 1 to 7, in which the reinforcing filler is formed majoritarily of silica and/or alumina.

**9.** A composition according to Claim 8, in which another white filler selected from chalk, talc or kaolin, preferably in an amount of 2.5 to 12.5% (% by weight relative to the weight of silica and/or alumina) is associated with the silica and/or alumina.

**10.** A composition according to Claim 9, the amount of the other white filler selected from chalk, talc or kaolin being from 5 to 10% (% by weight relative to the weight of silica and/or alumina).

**11.** A composition according to Claims 8 or 9 or 10, in which titanium oxide, preferably in an amount of 0.5 to 7% (% by weight relative to the weight of silica and/or alumina), is associated with the silica and/or alumina.

**12.** A composition according to Claim 11, the amount of titanium oxide being from 1% to 3%.

**13.** A composition according to any one of Claims 1 to 12, the compounds A, B, C and D being present in the following amounts:

A: 1.0 to 5 phr;
B: 0.5 to 3 phr;
C: 0.5 to 3 phr;
D: 0.5 to 3 phr,

the total content of the anti-photo-oxidising system (A+B+C+D) preferably being within a range from 2.5 to 10 phr.

**14.** A composition according to Claim 13, the compounds A, B, C and D being present in the following amounts:

A: 1.5 to 2.5 phr;
B: 0.5 to 1.5 phr;
C: 0.5 to 1.5 phr;
D: 0.5 to 1.5 phr.

**15.** A composition according to Claims 13 or 14, the total content of the anti-photo-oxidising system (A+B+C+D) being within a range from 3.0 to 7.0 phr.

**16.** A coloured tyre or rubber article for such a tyre, **characterised in that** it comprises a rubber composition according to any one of Claims 1 to 15.

**17.** A rubber article according to Claim 16, selected from the group consisting of treads, underlayers, sidewalls, protectors and beads.

**18.** A process for protecting against photo-oxidising ageing a white, clear or coloured tyre rubber composition devoid of carbon black, **characterised in that** there is incorporated by mixing into said composition before the vulcanisation thereof an anti-photo-oxidising system based on at least:

(A) a 2,2'-methylene-bis-[4-($C_1$ to $C_{10}$)alkyl-6-($C_1$ to $C_{12}$)alkylphenol];
(B) a dialkyl thiodipropionate, the alkyl radicals of which, which may be identical or different, are $C_1$ to $C_{30}$ radicals, preferably $C_8$ to $C_{20}$ radicals;
(C) a 2-(2-hydroxyphenyl)benzotriazole;
(D) an "HALS" amine derived from 2,2,6,6-tetramethyl piperidine.

**19.** A process according to Claim 18, in which compound A is a 2,2'-methylene-bis-[4-($C_1$-$C_4$)alkyl-6-($C_1$-$C_7$)-alkylphenol].

**20.** A process according to Claim 19, in which compound A is 2,2'-methylene-bis-[4-(methyl)-6-t-butylphenol].

**21.** A process according to any one of Claims 18 to 20, in which compound B is a ($C_8$ to $C_{20}$)dialkyl thiodipropionate.

**22.** A process according to Claim 21, in which compound B is dilauryl thiodipropionate or distearyl thiodipropionate.

**23.** The use, for protecting against photo-oxidation of white, clear or coloured tyre rubber compositions devoid of carbon black, of an anti-photo-oxidising system based on at least:

(A) a 2,2'-methylene-bis-[4-($C_1$ to $C_{10}$)alkyl-6-($C_1$ to $C_{12}$)alkylphenol];
(B) a dialkyl thiodipropionate, the alkyl radicals of which, which may be identical or different, are $C_1$ to $C_{30}$ radicals, preferably $C_8$ to $C_{20}$ radicals;
(C) a 2- (2-hydroxyphenyl)benzotriazole;
(D) an "HALS" amine derived from 2,2,6,6-tetramethyl piperidine.

**24.** The use according to Claim 23, in which compound A is a 2,2'-methylene-bis-[4-($C_1$-$C_4$)alkyl-6-($C_1$-$C_7$)alkyl phenol].

**25.** The use according to Claim 24, in which compound A is 2,2'-methylene-bis-[4-(methyl)-6-t-butylphenol].

**26.** The use according to any one of Claims 23 to 25, in which compound B is a ($C_8$ to $C_{20}$)dialkyl thiodipropionate.

**27.** The use according to Claim 26, in which compound B is dilauryl thiodipropionate or distearyl thiodipropionate.